(19) **Europäisches Patentamt**
**European Patent Office**
**Office européen des brevets**

(11) **EP 2 758 665 B1**

(12) **EUROPÄISCHE PATENTSCHRIFT**

(45) Veröffentlichungstag und Bekanntmachung des Hinweises auf die Patenterteilung:
**19.12.2018 Patentblatt 2018/51**

(21) Anmeldenummer: **12762274.4**

(22) Anmeldetag: **20.09.2012**

(51) Int Cl.:
*F04B 35/00* (2006.01)   *F02B 33/06* (2006.01)
*F02B 39/06* (2006.01)   *F16H 3/44* (2006.01)
*F02B 39/12* (2006.01)

(86) Internationale Anmeldenummer:
**PCT/EP2012/068486**

(87) Internationale Veröffentlichungsnummer:
**WO 2013/041596 (28.03.2013 Gazette 2013/13)**

(54) **KOMPRESSORSYSTEM UND VERFAHREN ZUM BETREIBEN EINES KOMPRESSORSYSTEMS**

COMPRESSOR SYSTEM AND METHOD OF OPERATING A COMPRESSOR SYSTEM

SYSTÈME DE COMPRESSEUR ET MÉTHODE POUR OPÉRER UN SYSTÈME DE COMPRESSEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.09.2011 DE 102011114046**

(43) Veröffentlichungstag der Anmeldung:
**30.07.2014 Patentblatt 2014/31**

(73) Patentinhaber: **KNORR-BREMSE Systeme für Nutzfahrzeuge GmbH
80809 München (DE)**

(72) Erfinder:
• **GEIS-ESSER, Daniel
81377 München (DE)**
• **REBHAN, Stephan
81373 München (DE)**

(56) Entgegenhaltungen:
**EP-A1- 0 191 150      DE-A1- 2 303 562
DE-A1- 3 740 082      DE-A1- 3 810 911
DE-A1-102006 009 704   DE-A1-102008 053 383
US-A1- 2009 127 926**

**Beschreibung**

Die vorliegende Erfindung betrifft ein Kompressorsystem gemäß Oberbegriff von Anspruch 1.

Die vorliegende Erfindung betrifft weiterhin ein Verfahren zum Betreiben eines Kompressorsystems gemäß Oberbegriff von Anspruch 7.

Um den Druckluftbedarf von Teilsystemen moderner Nutzfahrzeuge befriedigen zu können, werden die einer Druckluftversorgungseinrichtung zugehörigen Kompressoren häufig mit einer Übersetzung i < 1 ausgestattet. Die Übersetzung i zwischen der Drehzahl der Antriebswelle $n_{Antrieb}$, die mit der Motordrehzahl des Nutzfahrzeugs identisch ist, und der Drehzahl der Abtriebswelle $n_{Abtrieb}$, die mit der Kompressordrehzahl identisch ist, ist dabei als $i = n_{Antrieb} / n_{Abtrieb}$ definiert und möglichst klein gewählt.

Dies ist vorteilhaft, da insbesondere bei geringen Motordrehzahlen oft ein erhöhter Luftbedarf des Nutzfahrzeugs vorliegt. Beispielsweise ist dies der Fall bei einem Container-Wechselbetrieb oder bei einem Bus, der eine Haltestelle anfährt. Letzterer muss dort zunächst anhalten, die Türen öffnen und die Luftfederung entlüften, um ein komfortables Aussteigen bei niedrigem Bodenniveau des Busses zu ermöglichen. Anschließend müssen die Türen wieder geschlossen und die Luftfederung vor dem Anfahren erneut belüftet werden. Die genannten Vorgänge verbrauchen viel Druckluft, die bei einer geringen Motordrehzahl aufgebracht werden muss.

Durch die kleinere Übersetzung wird die geförderte Druckluftmenge nicht nur bei niedrigen Motordrehzahlen sondern auch bei hohen Motordrehzahlen erhöht.

Kompressoren, die beispielsweise auch als Luftpresser oder Luftverdichter bezeichnet werden können, haben aufgrund ihrer mechanischen und thermodynamischen Auslegung eine Drehzahlgrenze, oberhalb der sie nicht zuverlässig betrieben werden können. Einerseits können durch extreme Belastungen des Kompressors bei hohen Motordrehzahlen mechanische Schäden entstehen, andererseits sinkt der Wirkungsgrad des Kompressors ab. Dies gilt insbesondere, da die Nenndrehzahl des Antriebsmotors von ungefähr 2000 Umdrehungen pro Minute durch die Bremsdrehzahl (ungefähr 2400 Umdrehungen pro Minute) im Falle einer Motorbremsung deutlich überschritten werden kann. Problematisch hierbei ist, dass bei Durchführung einer Motorbremsung eine Abschaltung oder eine Entlastung des Kompressors zur Materialschonung oft nicht erwünscht ist, da eventuell Druckluft für die Betriebsbremse zum zusätzlichen Abbremsen des Fahrzeugs benötigt wird. Dieser Druckluftverbrauch ist sogar anzunehmen, da das Nutzfahrzeug bereits durch die Motorbremse abgebremst werden soll. Weiterhin ist auch aus Effizienzgründen eine Abschaltung oder eine Entlastung des Kompressors während einer Motorbremsung unerwünscht. Eine Motorbremsung stellt nämlich eine sogenannte Schubphase dar, während der der Antriebsmotor keinen Brennstoff verbraucht, so dass das Erzeugen von Druckluft während einer Motorbremsung besonders energieeffizient ist.

Die DE 38 10 911 A1 beschreibt ein Planetengetriebe, das zum Antrieb eines Hilfsaggregates eines Motors als Verbindungsglied zwischen dem Motor und dem Hilfsaggregat vorgesehen ist. Das beschriebene Planetengetriebe umfasst eine Fliehkraftkupplung und eine elektromagnetische Kupplung, die unterschiedliche Teile des Planetengetriebes gegeneinander festlegen können.

Die DE 37 40 082 A1 beschreibt ebenfalls ein Planetengetriebe zur Antriebsverbindung eines Hilfsaggregates mit einem Motor, wobei eine zur Festlegung von Teilen des Planetengetriebes vorgesehene Blockiervorrichtung als umlaufende hydrostatische Pumpeneinheit ausgebildet ist.

Die EP 0 191 150 A1 und die US 2009/01278926 A1 beschreiben jeweils pneumatisch betätigbare Fixiervorrichtungen, die in Druckluftversorgungssystemen von Fahrzeugen eingesetzt werden.

Der Erfindung liegt die Aufgabe zugrunde, ein Kompressorsystem bereitzustellen, das diesen Zielkonflikt zwischen maximaler Luftfördermenge bei niedrigen Motordrehzahlen und einer Belastungsbegrenzung des Kompressors bei hohen Drehzahlen mit geringem baulichem Aufwand löst.

Diese Aufgabe wird durch die Merkmale der unabhängigen Ansprüche gelöst.

Vorteilhafte Ausgestaltungen und Weiterbildungen der Erfindung sind in den abhängigen Ansprüchen angegeben.

Das gattungsgemäße Kompressorsystem umfasst ein Planetengetriebe mit einer Eingangswelle und einer Ausgangswelle und einen an die Ausgangswelle gekoppelten Kompressor zur Erzeugung von Druckluft, wobei das Planetengetriebe relativ zueinander bewegbare Komponenten in Form eines Hohlrades, eines Planetenträgers und eines Sonnenrades umfasst, und wobei eine erste schaltbare Fixiervorrichtung vorgesehen ist, durch die zwei der relativ zueinander bewegbaren Komponenten des Planetengetriebes gegeneinander festlegbar sind und wobei eine zweite schaltbare Fixiervorrichtung vorgesehen ist, durch die das Hohlrad, der Planetenträger oder das Sonnenrad gegenüber einem äußeren Widerlager festlegbar ist. Erfindungsgemäß ist vorgesehen, dass die erste schaltbare Fixiervorrichtung und/oder die zweite schaltbare Fixiervorrichtung pneumatisch ansteuerbar sind und dass das Kompressorsystem ein die erste schaltbare Fixiervorrichtung und die zweite schaltbare Fixiervorrichtung ansteuerndes Steuergerät umfasst, und dass das Steuergerät dazu eingerichtet ist, eine mit einem Drehzahlsensor ermittelte Drehzahl der Eingangswelle und/oder eine mit einem weiteren Drehzahlsensor ermittelte Drehzahl eines die Eingangswelle antreibenden Motors und eine mit einem Temperatursensor ermittelte Temperatur eines Kompressors zu empfangen, wobei die empfangenen Werte Basis für verschiedene Schaltkriterien sind, die voneinander unabhängig ausgewertet werden, wobei immer die größte Übersetzung durch ein Betätigen der beiden schaltbaren Fixiervorrichtungen ausgewählt wird, die sich aus den einzelnen Schaltkriterien ableiten lässt, um eine unzulässig hohe Belastung des Kompressors zu verhindern. Die Eingangswelle und die Ausgangswelle können jeweils mit einer der relativ zueinander bewegbaren Komponenten des Planetengetriebes verbunden sein. Das Planetengetriebe kann bei einer konstanten Drehzahl der Eingangswelle mindestens zwei voneinander verschiedene Drehzahlen an der Ausgangswelle bereitstellen, mit der der Kompressor angetrieben werden kann. Dies entspricht zwei unterschiedlichen Übersetzungen. Auf diese Weise kann bei einer niedrigen Drehzahl an der Eingangswelle eine geringere Übersetzung bereitgestellt werden, so dass die an der Ausgangswelle bereitgestellte Drehzahl zum Antreiben des Kompressors möglichst groß ist. Weiterhin kann bei einer hohen an der Eingangswelle anliegenden Drehzahl eine größere Übersetzung bereitgestellt werden, so dass die an der Ausgangswelle zum Antrieb des Kompressors bereitgestellte Drehzahl gegenüber der geringeren Übersetzung reduziert ist. Zur Auswahl der Übersetzung des Planetengetriebes sind die erste schaltbare Fixiervorrichtung und die zweite schaltbare Fixiervorrichtung vorgesehen, die in an sich bekannter Weise Teile des Planetengetriebes gegeneinander festlegen können. Die schaltbaren Fixiervorrichtungen können beispielsweise pneumatisch oder elektrisch ansteuerbare Lamellenkupplungen sein. Eine Kombination aus einer Synchronisierungsvorrichtung und einem einfachen Sperrglied als schaltbare Fixiervorrichtung ist ebenfalls möglich. Denkbar ist beispielsweise ein Synchronring in Kombination mit einer Schaltmuffe und einer geeigneten Schaltverzahnung. Weiterhin können die Fixiervorrichtungen einen oder mehrere betätigbare Elektromotoren aufweisen, die ein wahlweises Öffnen und Schließen der Fixiervorrichtungen erlauben. Die Fixiervorrichtungen können direkt oder indirekt durch ein elektronisches Steuergerät ansteuerbar sein, in die das Kompressorsystem integriert ist, beispielsweise durch ein elektronisches Steuergerät der Druckluftversorgungsanlage. Der Wechsel zwischen verschiedenen Übersetzungen kann bei dem Planetengetriebe ohne Unterbrechung des Kraftflusses erfolgen.

Das Vorsehen eines die erste schaltbare Fixiervorrichtung und die zweite schaltbare Fixiervorrichtung ansteuernden Steuergeräts erlaubt die Verwendung des beschriebenen Kompressorsystems als Bestandteil bereits bekannter Druckluftversorgungsanlagen, wobei insbesondere auf eine Anpassung bereits vorhandener elektronischer Steuergeräte einer Druckluftaufbereitungsanlage verzichtet werden kann. Dies erlaubt die Verwendung des beschriebenen Kompressorsystems zusammen mit beliebigen dem Fachmann bekannten Druckluftaufbereitungsanlagen.

Vorteilhafterweise kann vorgesehen sein, dass das Hohlrad gegenüber einem äußeren Widerlager durch die erste schaltbare Fixiervorrichtung festlegbar ist, und dass das Hohlrad gegenüber dem Planetenträger durch die zweite schaltbare Fixiervorrichtung festlegbar ist. Diese spezielle Ausgestaltung erlaubt eine besonders einfache Realisierung der ersten schaltbaren Fixiervorrichtung, da das gegenüber dem Widerlager festzulegende Hohlrad in der Regel die anderen relativ zueinander bewegbaren Komponenten des Planetengetriebes einhüllt.

Es kann vorgesehen sein, dass die Eingangswelle mit dem Planetenträger verbunden ist, und dass die Ausgangswelle mit einem Sonnenrad verbunden ist. Auf diese Weise können die von dem Planetengetriebe bereitstellbaren Übersetzungen beeinflusst werden.

Nützlicherweise kann vorgesehen sein, dass das Steuergerät dazu ausgelegt ist, durch das Betätigen der zweiten schaltbaren Fixiervorrichtung das Hohlrad gegenüber dem äußeren Widerlager festzulegen, wenn eine an der Eingangswelle anliegende Drehzahl kleiner oder gleich einer festlegbaren Schwellendrehzahl ist. Das Festlegen einer Schwellendrehzahl ist ein wirksames Auswahlkriterium für die von dem Planetengetriebe bereitzustellende Übersetzung. Die Schwellendrehzahl kann beispielsweise 1500 Umdrehungen pro Minute betragen. Auf diese Weise kann das von dem Kompressor geförderte Luftvolumen bei geringen Drehzahlen gesteigert werden.

Weiterhin kann vorgesehen sein, dass das Steuergerät dazu ausgelegt ist, durch das Betätigen der ersten schaltbaren Fixiervorrichtung das Hohlrad gegenüber dem Planetenträger festzulegen, wenn eine an der Eingangswelle anliegende Drehzahl größer als eine festlegbare Schwellendrehzahl ist. Die Schwellendrehzahl kann beispielsweise 1500 Umdrehungen pro Minute betragen. Auf diese Weise kann das von dem Kompressor bei hohen Motordrehzahlen geförderte Luftvolumen gegenüber der anderen möglichen Übersetzung reduziert werden, um die Belastung und den Verschleiß des Kompressors zu beschränken.

Weiterhin kann vorgesehen sein, dass das Planetengetriebe mehrstufig ausgeführt ist. Die Verwendung eines mehrstufigen Planetengetriebes, das heißt eines mehrere Planetenradsätze umfassenden Planetengetriebes erlaubt die Bereitstellung zusätzlicher Übersetzungen, so dass die Anpassung des von dem Kompressor geförderten Luftvolumens an die an der Eingangswelle anstehenden Drehzahl abgestuft anpassbar ist. Es können beispielsweise zusätzliche Schwellendrehzahlen vorgesehen sein, die verschiedene Drehzahlbereiche des Antriebsmotors begrenzen. Jedem so definierten Drehzahlbereich kann eine eigene Übersetzung zugeordnet sein, die bei Vorliegen einer Motordrehzahl in dem jeweiligen Drehzahlbereich ausgewählt werden kann. Die Einstellung der ausgewählten Übersetzung kann beispielsweise über weitere schaltbare Fixiervorrichtungen realisiert sein, die den weiteren Planetenradsätzen zugeordnet sein können. Auf diese Weise kann das von dem Kompressor geförderte Luftvolumen unabhängiger von der Motordrehzahl gestaltet sein.

Das gattungsgemäße Verfahren zum Betreiben eines Kompressorsystems umfassend ein Planetengetriebe mit einer Eingangswelle und einer Ausgangswelle und einen an die Ausgangswelle gekoppelten Kompressor zur Erzeugung von Druckluft, wobei das Planetengetriebe relativ zueinander bewegbare Komponenten in Form eines Hohlrades, eines Planetenträgers und eines Sonnenrades umfasst, sieht vor, dass zwei der relativ zueinander bewegbaren Komponenten durch eine erste schaltbare Fixiervorrichtung gegeneinander festgelegt werden, wenn keine der relativ zueinander bewegbaren Komponenten gegenüber dem Widerlager festgelegt ist, und wobei das Hohlrad, der Planetenträger oder das Sonnenrad durch eine zweite schaltbare Fixiervorrichtung gegenüber einem äußeren Widerlager festgelegt wird, wenn eine an der Eingangswelle anliegende Drehzahl eine festlegbare Schwellendrehzahl über- oder unterschreitet. Erfindungsgemäß ist vorgesehen, dass die erste schaltbare Fixiervorrichtung und die zweite schaltbare Fixiervorrichtung pneumatisch angesteuert werden, und dass ein Steuergerät die beiden schaltbaren Fixiervorrichtungen ansteuert, und dass das Steuergerät, eine mit einem Drehzahlsensor ermittelte Drehzahl der Eingangswelle und/oder eine mit einem weiteren Drehzahlsensor ermittelte Drehzahl eines die Eingangswelle antreibenden Motors und eine mit einem Temperatursensor ermittelte Temperatur eines Kompressors empfängt, wobei die empfangenen Werte Basis für verschiedene Schaltkriterien sind, die voneinander unabhängig ausgewertet werden, wobei immer die größte Übersetzung durch ein Betätigen der beiden schaltbaren Fixiervorrichtungen ausgewählt wird, die sich aus den einzelnen Schaltkriterien ableiten lässt, um eine unzulässig hohe Belastung des Kompressors zu verhindern. Insbesondere kann das Verfahren jegliche Kompressorsysteme, wie vorstehend beschrieben, verwenden.

Auf diese Weise können die Vorteile und Besonderheiten des beschriebenen Kompressorsystems auch im Rahmen eines Verfahrens umgesetzt werden.

Das Verfahren kann in einfacher Weise dadurch weitergebildet werden, dass das Hohlrad gegenüber einem äußeren Widerlager festgelegt wird, wenn eine an der Eingangswelle anliegende Drehzahl kleiner oder gleich der festlegbaren Schwellendrehzahl ist, und dass das Hohlrad gegenüber dem Planetenträger festgelegt wird, wenn die an der Eingangswelle anliegende Drehzahl größer als die festlegbare Schwellendrehzahl ist.

Die Vorteile und Besonderheiten im Zusammenhang mit dem in den abhängigen Ansprüchen beschriebenen Kompressorsystem, können in gleicher Weise mit dem beschriebenen Verfahren umgesetzt werden.

Das Kompressorsystem und das Verfahren werden im Folgenden anhand beispielhafter Ausführungsformen beschrieben.

Es zeigen:

Figur 1　eine Ausführungsform eines Kompressorsystems in einem ersten Schaltzustand;

Figur 2　eine Ausführungsform eines Kompressorsystems in einem zweiten Schaltzustand;

Figur 3　eine Ausführungsform eines Kompressorsystems in einem dritten Schaltzustand;

Figur 4　eine schematische Darstellung eines Planetengetriebes; und

Figur 5　ein Flussdiagramm zur Veranschaulichung eines Verfahrens.

In den folgenden Zeichnungen bezeichnen gleiche Bezugszeichen gleiche oder gleichartige Teile.

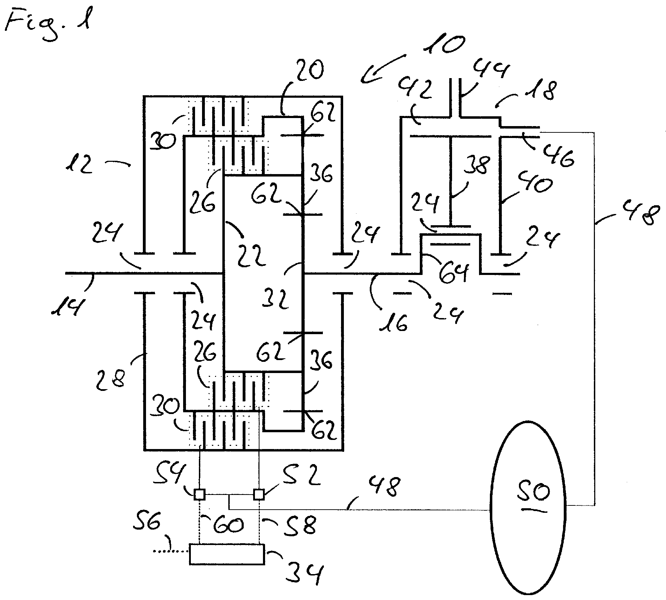

Figur 1 zeigt eine Ausführungsform eines Kompressorsystems in einem ersten Schaltzustand. Das dargestellte Kompressorsystem 10 umfasst ein Planetengetriebe 12 mit einer Eingangswelle 14 und einer Ausgangswelle 16. An die Ausgangswelle 16 ist ein Kompressor 18 zur Erzeugung von Druckluft gekoppelt. Das Planetengetriebe 12 kann einen mit der Eingangswelle 14 starr gekoppelten Planetenträger 22 umfassen. Der Planetenträger 22 kann auf der der Eingangswelle 14 abgewandten Seite ein oder mehrere Planetenräder 36 tragen. Die Planetenräder 36 können über Verzahnungen 62 mit einem Hohlrad 20 und einem Sonnenrad 32 verzahnt sein. Die vorhandenen Planetenräder 36 können gegenüber dem Planetenträger 22 drehbar gelagert sein. Das Hohlrad 20 kann über eine Lagerung 24 beispielsweise auf der Eingangsweile 14 drehbar gelagert sein. Weiterhin kann eine erste schaltbare Fixiervorrichtung 26 vorgesehen sein, die den Planetenträger 22 gegenüber dem Hohlrad 20 festlegen kann. Die erste schaltbare Fixiervorrichtung 26 kann beispielsweise als einfache Lamellenkupplung oder als Kombination aus einem Sperrglied mit einer Synchronisierungsvorrichtung ausgeführt sein. Das Planetengetriebe 12 kann weiterhin ein äußeres Widerlager 28 umfassen. Eine zweite schaltbare Fixiervorrichtung 30 kann zur Festlegung des Hohlrades 20 gegenüber dem äußeren Widerlager 28 vorgesehen sein. Die zweite schaltbare Fixiervorrichtung 30 kann ebenfalls als einfache Lamellenkupplung oder als Kombination aus einem mechanischen Sperrglied und einer Synchronisierungsvorrichtung ausgeführt sein. Denkbar ist beispielsweise eine Kombination aus einer Schaltmuffe, einem Synchronring und einer passenden Schaltverzahnung. Die erste und die zweite schaltbare Fixiervorrichtung können auch durch andere dem Fachmann bekannte Ausgestaltungen realisiert sein, die in der Figur nicht explizit dargestellt sind. Das äußere Widerlager 28 kann über Lagerungen 24 gegenüber der Eingangswelle 14 und der Ausgangswelle 16 drehbar sein. Das äußere Widerlager 28 kann beispielsweise als ein die Bestandteile des Planetengetriebes 12 aufnehmendes Gehäuse ausgeführt sein. Das Hohlrad 20, der Planetenträger 22 und das Sonnenrad 32 können die relativ zueinander bewegbaren Komponenten des Planetengetriebes 12 sein.

Der an die Ausgangswelle 16 gekoppelte Kompressor 18 kann beispielsweise als einfacher Hubkolbenkompressor ausgeführt sein. Als solcher kann der Kompressor 18 eine von der Ausgangswelle 16 angetriebene Kurbelwelle 64 umfassen, die über Lagerungen 24 drehbar gelagert sein kann. Die Kurbelwelle 64 kann beispielsweise einen in einem Kompressorgehäuse 40 angeordneten Kolben 38 antreiben, der durch sein periodisches Auf und Ab in dem Kompressorgehäuse 40 Druckluft erzeugt. Zu diesem Zweck kann unverdichtete Luft über einen Lufteinlass 44 in einen Kolbenraum 42 einströmen. Die in den Kolbenraum 42 eingeströmte Luft wird durch die Bewegung des Kolbens 38 verdichtet und verlässt als Druckluft über einen Luftauslass 46 den Kompressor 18. Ein unerwünschtes Rückströmen von Luft durch den Kompressor 18, das beispielsweise eine Verdichtung der Luft behindert, kann durch entsprechende Ein- und Auslassventile an dem Lufteinlass 44 und dem Luftauslass 46 verhindert werden. Die Druckluft kann über eine an dem Luftauslass 46 des Kompressors 18 angeschlossene Druckluftleitung 48 zur weiteren Verwendung beziehungsweise Aufbereitung weitergeleitet werden. In Figur 1 ist in diesem Zusammenhang lediglich exemplarisch ein Vorratsbehälter 50 dargestellt, der sowohl als Symbol für eine Druckluftaufbereitung, eine Druckluftbevorratung sowie angeschlossene Druckluftverbraucher stehen kann.

Die erste schaltbare Fixiervorrichtung 26 kann über eine erste Ventileinrichtung 52 pneumatisch mit einem Druckluftsignal angesteuert werden. Weiterhin kann die zweite schaltbare Fixiervorrichtung 30 pneumatisch über eine zweite Ventileinrichtung 54 mit einem pneumatischen Steuersignal angesteuert werden. Die erste Ventileinrichtung 52 und die zweite Ventileinrichtung 54 können über eine erste Steuerleitung 58 und eine zweite Steuerleitung 60 von einem elektronischen Steuergerät 34 angesteuert werden. Das elektronische Steuergerät 34 kann über eine Signalleitung 56 mit einem Fahrzeugbus und/oder weiteren Steuergeräten des Fahrzeugs, beispielsweise einem die Eingangswelle 14 antreibenden Antriebsmotor, gekoppelt sein. Die erste Ventileinrichtung 52 und die zweite Ventileinrichtung 54 können beispielsweise als einfache 3/2-Wegeventile mit eigener Entlüftung ausgeführt sein. Auf diese Weise können die erste schaltbare Fixiervorrichtung 26 und die zweite schaltbare Fixiervorrichtung 30 jeweils zwischen einem offenen und einem geschlossenen Schaltzustand geschaltet werden. Der offene Schaltzustand der ersten schaltbaren Fixiervorrichtung 26 kann einer relativen Drehbarkeit des Hohlrades 20 gegenüber dem Planetenträger 22 entsprechen. Der offene Schaltzustand kann dementsprechend eine nicht kraftschlüssige Neutralstellung der ersten schaltbaren Fixiervorrichtung 26 bezeichnen. Der geschlossene Schaltzustand der ersten schaltbaren Fixiervorrichtung 26 kann einer Festlegung des Hohlrades 20 gegenüber dem Planetenträger 22 entsprechen. In diesem Schaltzustand kann das Hohlrad 20 gegenüber dem Planetenträger 22 fixiert sein. Der geschlossene Schaltzustand kann dementsprechend eine kraftschlüssige Kopplung des Hohlrades 20 mit dem Planetenträger 22 bezeichnen. In gleicher Weise kann der offene Schaltzustand der zweiten schaltbaren Fixiervorrichtung 30 einer relativen Bewegbarkeit des Hohlrades 20 gegenüber dem äußeren Widerlager 28 entsprechen, wobei der offene Schaltzustand eine nicht kraftschlüssige Neutralstellung bezeichnen kann. Ebenso kann der geschlossene Schaltzustand der zweiten schaltbaren Fixiervorrichtung 30 einer Festlegung des Hohlrades 20 gegenüber dem äußeren Widerlager 28 entsprechen, wobei der geschlossene Schaltzustand eine kraftschlüssige Kopplung des Hohlrades 20 gegenüber dem äußeren Widerlager 28 bezeichnen kann. Die geschlossenen Schaltzustände der ersten schaltbaren Fixiervorrichtung 26 und der zweiten schaltbaren Fixiervorrichtung 30 können beispielsweise durch das Anlegen eines pneumatischen Steuerdrucks über die erste Ventileinrichtung 52 oder die zweite Ventileinrichtung 54 angeregt werden. Ebenso können die offenen Schaltzustände der ersten schaltbaren Fixiervorrichtung 26 und der zweiten schaltbaren Fixiervorrichtung 30 im drucklosen Zustand, das heißt ohne pneumatisches Steuersignal, angenommen werden. Alternativ zu der dargestellten pneumatischen Ansteuerung ist auch eine direkte elektrische Ansteuerung der ersten schaltbaren Fixiervorrichtung 26 und der zweiten schaltbaren Fixiervorrichtung 30 durch das Steuergerät 34 möglich. Die erste schaltbare Fixiervorrichtung 26 und die zweite schaltbare Fixiervorrichtung 30 können bei dieser alternativen Ausgestaltung beispielsweise jeweils mindestens einen Elektromotor umfassen, die ein wahlweises öffnen und Schließen der Fixiervorrichtungen 26, 30 erlauben. Wenn die erste schaltbare Fixiervorrichtung 26 und die zweite schaltbare Fixiervorrichtung 30 gleichzeitig ihre jeweiligen offenen Schaltzustände annehmen, kann eine Drehmomentübertragung von der Eingangswelle 14 zu der Ausgangswelle 16 unterbrochen werden und wesentliche Komponenten des Planetengetriebes 12 können frei gegeneinander drehen. Dieser Betriebszustand des Planetengetriebes 12 kann zur Realisierung einer effizienten Abkopplung oder Trennung zwischen einem Antriebsmotor und dem Kompressor 18 genutzt werden. Das Planetengetriebe 12 kann daher eine Kupplungsfunktion ersetzen oder bereitstellen. Die Kupplungsfunktion kann durch das Planetengetriebe 12 generell bereitgestellt werden, wenn die Drehmomentübertragung zwischen der Eingangswelle 14 und der Ausgangswelle 16 unterbrochen werden kann. Wenn die erste schaltbare Fixiervorrichtung 26 und die zweite schaltbare Fixiervorrichtung 30 sich jeweils in ihren geschlossenen Schaltzuständen befinden, kann das Planetengetriebe 12 gesperrt sein.

Dargestellt in Figur 1 ist der erste Schaltzustand des Planetengetriebes 12, bei dem sowohl die erste schaltbare Fixiervorrichtung 26 als auch die zweite schaltbare Fixiervorrichtung 30 in ihren offenen Schaltzuständen sind. In diesem ersten Schaltzustand des Planetengetriebes 12 können der Planetenträger 22, das Hohlrad 20 und das äußere Widerlager 28 frei gegeneinander drehen, so dass ein an der Eingangswelle 14 anstehendes Drehmoment nicht auf die Ausgangswelle 16 übertragen wird. Das Planetengetriebe 12 ist in der ersten Schaltstellung im Freilauf und das Kompressorsystem 10 fördert keine Druckluft.

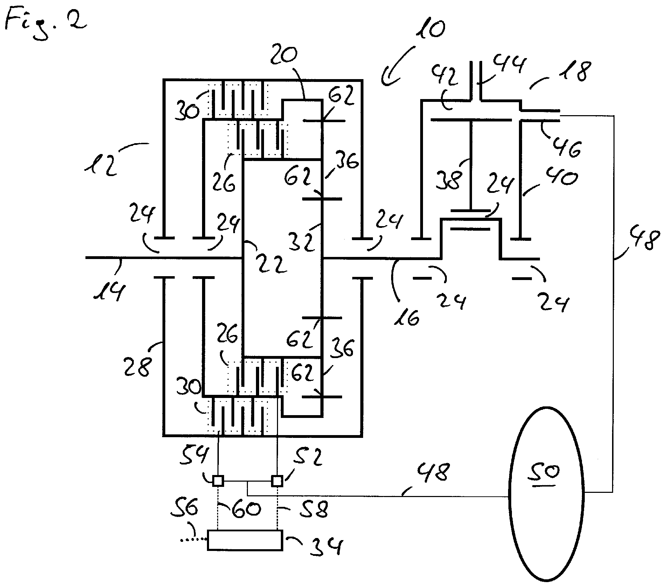

Figur 2 zeigt eine Ausführungsform eines Kompressorsystems in einem zweiten Schaltzustand. Im Gegensatz zu dem aus Figur 1 bekannten ersten Schaltzustand des Kompressorsystems 10 ist in Figur 2 die erste schaltbare Fixiervorrichtung 26 in ihrer geschlossenen Schaltposition dargestellt. Dementsprechend liegt an der ersten schaltbaren Fixiervorrichtung 26 über die erste Ventileinrichtung 52 ein pneumatisches Steuersignal an, das durch Betätigen der ersten Ventileinrichtung 52 über die erste Steuerleitung 58 durch das Steuergerät 34 erzeugt wurde. In dem dargestellten zweiten Schaltzustand des Planetengetriebes 12 kann das Hohlrad 20 gegenüber dem äußeren Widerlager 28 frei drehen, da die zweite schaltbare Fixiervorrichtung 30 in ihrem offenen Schaltzustand ist. Das Hohlrad 20 ist durch die erste schaltbare Fixiervorrichtung 26 gegenüber dem Planetenträger 22 festgelegt, so dass sich das Hohlrad 20 synchron mit dem Planetenträger 22 um eine durch die Eingangswelle 14 vorgegebene Drehachse dreht. Aufgrund der Festlegung des Hohlrades 20 gegenüber dem Planetenträger 22 können sich die von dem Planetenträger 22 getragenen Planetenräder 36 nicht relativ zu dem Planetenträger 22 drehen, da dies über die Verzahnung 62 zwischen dem Hohlrad 20 und dem Planetenträger 22 verhindert wird. Als direkte Folge wird das Sonnenrad 32 über die Planetenräder 36 angetrieben, so dass sich die Ausgangswelle 16 mit der gleichen Geschwindigkeit und Drehrichtung wie die Eingangsweiie 14 dreht. In dem zweiten Schaltzustand hat das Planetengetriebe 12 daher eine Übersetzung i = 1, die einem Durchtrieb entspricht.

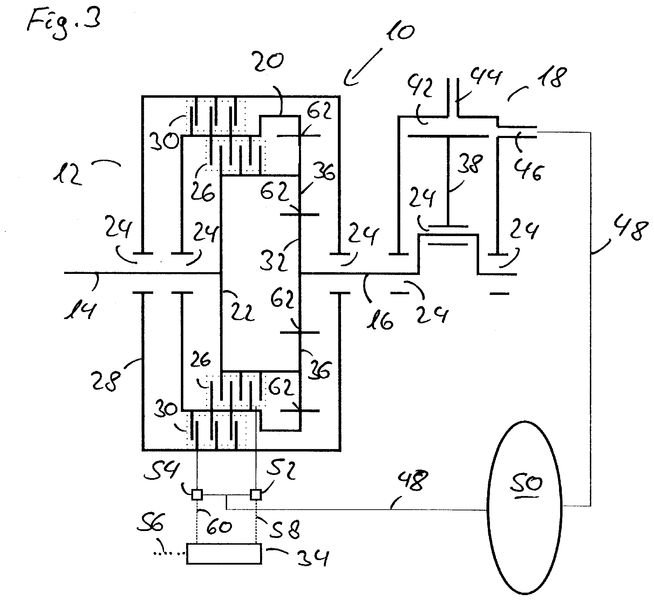

Figur 3 zeigt eine Ausführungsform eines Kompressorsystems in einem dritten Schaltzustand. Im Gegensatz zu dem aus Figur 1 bekannten ersten Schaltzustand befindet sich bei dem in Figur 3 dargestellten dritten Schaltzustand die zweite schaltbare Fixiervorrichtung 30 in ihrem geschlossenen Schaltzustand, während die erste schaltbare Fixiervorrichtung 26 sich in ihrem geöffneten Schaltzustand befindet. Somit ist der Planetenträger 22 gegenüber dem Hohlrad 20 frei drehbar, während das Hohlrad 20 gegenüber dem äußeren Widerlager 28 festgelegt ist. Eine Drehung der Eingangswelle 14 führt daher über die Drehung des Planetenträgers 22 zu einer relativen Drehung der Planetenräder 36 zu dem Hohlrad 20, da die Planetenräder 36 über die Verzahnung 62 mit dem Hohlrad 20 gekoppelt sind. Die Drehung der Planetenräder 36 induziert eine Drehung des Sonnenrades 32 und damit der Ausgangswelle 16, wobei sich das Sonnenrad 32 schneller als der antreibende Planetenträger 22 dreht. Die Übersetzung kann gemäß der Gleichung

$$ i = \frac{1}{1 - \frac{z_h}{z_s}} $$

ermittelt werden, wobei $z_h$ die Zähneanzahl des Hohlrads 20 (negativ) und $z_s$ die Zähneanzahl des Sonnenrades 32 bezeichnet. In dem dritten Schaltzustand des Planetengetriebes 12 wird der Kompressor 18 somit mit einer gegenüber der an der Eingangswelle 14 anstehenden Eingansdrehzahl höheren Drehzahl betrieben.

Das Planetengetriebe 12 umfasst in den Figuren 1 bis 3 lediglich einen einzigen Planetenradsatz. Durch die Verwendung mehrerer Planetenradsätze in einer dem Fachmann an sich bekannten Weise, beispielsweise durch serielles Hintereinanderschalten mehrerer Planetenradsätze, können zusätzliche Schaltzustände des Planetengetriebes 12 realisiert werden, die weitere Übersetzungsverhältnisse nach dem Prinzip eines Mehrganggetriebes bereitstellen.

Die Eingangswelle 14 kann beispielsweise über Riemen oder über ein Zahnrad von einem Antriebsmotor, insbesondere einem Antriebsmotor eines Fahrzeugs, angetrieben werden. Das Kompressorsystem 10 mit Planetengetriebe 12 ermöglicht es, bei Bedarf den Kompressor 18 von dem Antriebsmotor zu entkoppeln und die Fördermenge des Kompressors 18 durch eine Erhöhung der Drehzahl der Ausgangswelle 16 bei konstanter Drehzahl der Eingangswelle 14 zu realisieren. Der Wechsel zwischen den möglichen Übersetzungen ist ohne eine Unterbrechung des Kraftflusses von der Eingangswelle 14 zur Ausgangswelle 16 möglich. Wird beispielsweise keine Druckluftförderung benötigt, kann das Planetengetriebe 12 so geschaltet werden, dass die Eingangswelle 14 frei gegen die Ausgangswelle 16 drehbar ist und der Kompressor 18 stillsteht. Wird jedoch schnell eine große Menge an Druckluft benötigt oder ist eine überschüssige Antriebsleistung vorhanden, beispielsweise bei einem Schubbetrieb, bei dem der Antriebsmotor des Fahrzeugs in Form einer Motorbremse genutzt wird, so kann in Abhängigkeit von der an der Eingangswelle 14 anstehenden Drehzahl die an der Ausgangswelle 16 bereitgestellte Drehzahl zum Antrieb des Kompressors 18 durch Auswahl der Übersetzung des Planetengetriebes eingestellt werden.

Je nach Bedarf können die Eingangswelle 14 und die Ausgangswelle 16 auch mit anderen relativ zu-einander drehbaren Komponenten des Planetengetrie-bes 12 verbunden sein, wobei gleichzeitig die erste schaltbare Fixiervorrichtung 26 und die zweite schaltbare Fixiervorrichtung 30 in an sich bekannter Weise neu angeordnet werden, um eine geeignete Festlegung zwischen einzelnen Komponenten des Planetengetriebes zu erlauben. In der Regel kann bei diesen in den Figuren nicht dargestellten Ausführungsformen die nicht mit der Eingangswelle 14 oder der Ausgangswelle 16 verbundene Komponente des Planetengetriebes 12 durch die erste schaitbare Fixiervorrichtung 26 gegenüber dem Widerlager 28 festlegbar sein, das heißt drehfest koppelbar sein. Weiterhin kann bei diesen nicht dargestellten Ausführungsformen in der Regel eine drehfeste Kopplung zwischen zwei der relativ zueinander drehbaren Komponenten des Planetengetriebes 12 durch die zweite schaltbare Fixiervorrichtung 30 eine andere Übersetzung zwischen der Eingangswelle 14 und der Ausgangswelle 16 bereitstellen.

Durch die unterschiedlichen Verbindungen und Anordnungen der beiden Fixiervorrichtungen 26, 30 kann in an sich bekannter Weise das Verhältnis zwischen Eingangsdrehzahl und Ausgangsdrehzahl, das heißt die Übersetzung des Planetengetriebes 12 verändert werden, ohne dass die Zähneanzahlen an dem Hohlrad 20 und dem Sonnenrad 32 geändert werden müssen. Beispielsweise kann in einfacher Weise die Eingangswelle 14 mit der Ausgangswelle 16 getauscht werden, um eine andere Ausführungsform mit veränderten Übersetzungen zu erhalten.

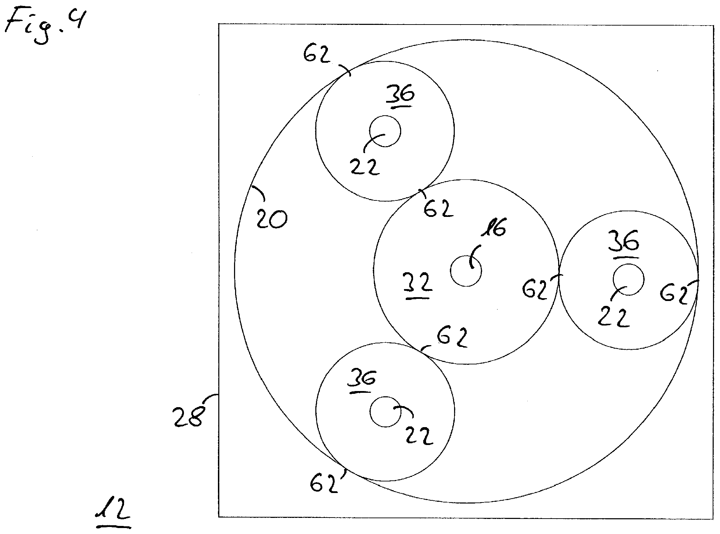

Figur 4 zeigt eine schematische Darstellung eines Planetengetriebes. Das schematisch dargestellte Planetengetriebe 12 umfasst das als Gehäuse dargestellte äußere Widerlager 28, welches die übrigen dargestellten Komponenten des Planetengetriebes 12 aufnimmt. Im Inneren des äußeren Widerlagers 28 sind das Hohlrad 20 und konzentrisch zu dem Hohlrad 20 das Sonnenrad 32 angeordnet. Das Sonnenrad 32 ist mit der Ausgangswelle 16 drehfest verbunden. Zwischen dem Sonnenrad 32 und dem Hohlrad 20 sind drei Planetenräder 36 dargestellt, die durch den Planetenträger 22 drehbar gelagert sind. Das Hohlrad 20 kann ein Innenzahnrad sein. Das Sonnenrad 32 und die Planetenräder 36 können normale Zahnräder sein. Das Sonnenrad 32, die Planetenräder 36 und das Hohlrad 20 können in der dargestellten Weise über die Verzahnungen 62 Kräfte aufeinander übertragen. Die Anzahl der in Figur 4 dargestellten Planetenräder 36 kann je nach Bedarf variiert werden.

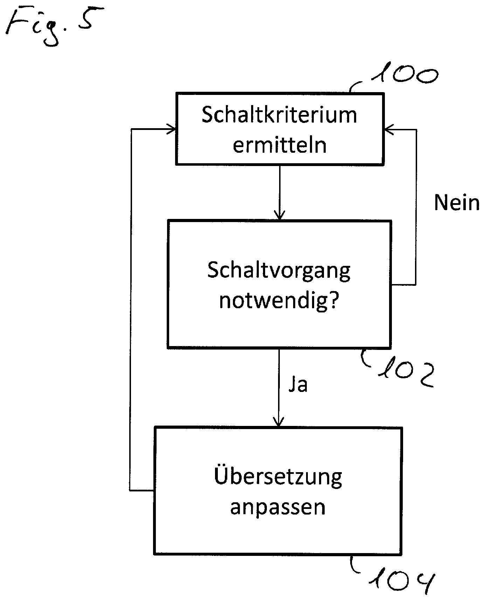

Figur 5 zeigt ein Flussdiagramm zur Veranschaulichung des Verfahrens. Das Verfahren kann durch das Ermitteln eines Schaltkriteriums bei Schritt 100 beginnen. Das Schaltkriterium kann beispielsweise die an der Eingangswelle des Planetengetriebes bereitgestellte Drehzahl sein. Denkbar ist auch die Verwendung der Drehzahl des die Eingangswelle antreibenden Motors. Ein weiteres Schaltkriterium kann der Druckluftbedarf sein. Wenn keine Druckluft benötigt wird, da Druckluft bereits in ausreichender Menge bevorratet ist, kann das Kompressorsystem die Erzeugung von Druckluft einstellen, bis erneut Druckluft benötigt wird. Denkbar ist auch die Temperatur des Kompressors als Schaltkriterium zu verwenden, da die Temperatur des Kompressors als Maß für den Verschleiß dienen kann. Die Drehzahl der Eingangswelle und die Drehzahl des die Eingangswelle antreibenden Antriebsmotors können beispielsweise über entsprechende Drehzahlsensoren direkt bestimmt werden. Die Temperatur des Kompressors kann beispielsweise über einen entsprechend angeordneten Temperatursensor bestimmt werden. Weiterhin kann ein Drehzahlsensor zur Bestimmung der Drehzahl der Ausgangswelle vorgesehen sein. Die auf diese Weise ermittelten Werte können an das zuständige Steuergerät, beispielsweise ein Steuergerät des Kompressorsystems übermittelt werden. Im Anschluss an Schritt 100 kann bei Schritt 102 unter Berücksichtigung des ermittelten Schaltkriteriums oder der ermittelten Schaltkriterien bestimmt werden, ob ein Schaltvorgang notwendig ist. Unter Schaltvorgang wird dabei die Überführung des Planetengetriebes aus seinem derzeitigen Schaltzustand verstanden, der eine andere Übersetzung des Planetengetriebes bereitstellt. Beispielsweise können Drehzahlbereiche definiert werden, die jeweils einer bestimmten Übersetzung des Planetengetriebes zugeordnet sind. Die Drehzahlbereiche können also anhand des oder der ermittelten Schaltkriterien ausgewählt werden. Verlässt die von einem Drehzahlsensor beispielsweise an der Eingangswelle gemessene Drehzahl einen definierten Drehzahlbereich, beispielsweise durch das Über- oder Unterschreiten eines den Drehzahlbereich begrenzenden Schwellenwertes, und liegt anschließend in einem anderen Drehzahlbereich, der einer anderen Übersetzung zugeordnet ist, so kann das Betätigen der schaltbaren Fixiervorrichtungen zum Überführen des Planetengetriebes in einen anderen Schaltzustand durch das Steuergerät vorgesehen sein. In analoger Weise kann eine Übersetzung aufgrund einer gemessenen Temperatur des Kompressors ausgewählt werden. Zusätzlich kann bei einem ausreichenden Druckluftvorrat die Förderung von Druckluft beendet werden, wenn ein anderes Schaltkriterium eine hiervon abweichende Übersetzung erlaubt. Die verschiedenen Kriterien können beispielsweise voneinander unabhängig ausgewertet werden. Um eine unzulässig hohe Belastung des Kompressors zu verhindern, kann bei mehreren Schaltkriterien immer die größte Übersetzung gewählt werden, die sich aus den einzelnen Schaltkriterien ableiten lässt. Durch das Betätigen der schaltbaren Fixiervorrichtungen kann die Übersetzung des Planetengetriebes angepasst werden, was beispielsweise in Schritt 104 erfolgt. Ist kein Schaltvorgang notwendig, Schritt 102-nein, kann direkt bei Schritt 100 fortgefahren werden. Auch nachdem die Übersetzung bei Schritt 104 angepasst wurde, kann erneut bei Schritt 100 mit dem Ermitteln und Überwachen des Schaltkriteriums fortgefahren werden.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

**Bezugszeichenliste**

10   Kompressorsystem
12   Planetengetriebe
14   Eingangswelle
16   Ausgangswelle
18   Kompressor
20   Hohlrad
22   Planetenträger
24   Lagerung
26   erste schaltbare Fixiervorrichtung
28   äußeres Widerlager
30   zweite schaltbare Fixiervorrichtung
32   Sonnenrad
34   Steuergerät
36   Planetenrad
38   Kolben
40   Kompressorgehäuse
42   Kolbenraum
44   Lufteinlass
46   Luftauslass
48   Druckluftleitung
50   Vorratsbehälter
52   erste Ventileinrichtung
54   zweite Ventileinrichtung
56   Signalleitung
58   erste Steuerleitung
60   zweite Steuerleitung
62   Verzahnung
64   Kurbelwelle
100   Schaltkriterium ermitteln
102   Schaltvorgang notwendig?
104   Übersetzung anpassen

**Patentansprüche**

1. Kompressorsystem (10) umfassend

   - ein Planetengetriebe (12) mit einer Eingangswelle (14) und einer Ausgangswelle (16) und einen an die Ausgangswelle (16) gekoppelten Kompressor (18) zur Erzeugung von Druckluft,
   - wobei das Planetengetriebe (12) relativ zueinander bewegbare Komponenten in Form eines Hohlrades (20), eines Planetenträgers (22) und eines Sonnenrades (32) umfasst, und
   - wobei eine erste schaltbare Fixiervorrichtung (26) vorgesehen ist, durch die zwei der relativ zueinander bewegbaren Komponenten des Planetengetriebes (12) gegeneinander festlegbar sind, und
   - wobei eine zweite schaltbare Fixiervorrichtung (30) vorgesehen ist, durch die das Hohlrad (20), der Planetenträger (22) oder das Sonnenrad (32) gegenüber einem äußeren Widerlager (28) festlegbar ist,

   **dadurch gekennzeichnet,**

   - **dass** die erste schaltbare Fixiervorrichtung (26) und/oder die zweite schaltbare Fixiervorrichtung (30) pneumatisch ansteuerbar sind,
   - **dass** das Kompressorsystem (10) ein die erste schaltbare Fixiervorrichtung (26) und die zweite schaltbare Fixiervorrichtung (30) ansteuerndes Steuergerät (34) umfasst, und
   - **dass** das Steuergerät (34) dazu eingerichtet ist, eine mit einem Drehzahlsensor ermittelte Drehzahl der Eingangswelle (14) und/oder eine mit einem weiteren Drehzahlsensor ermittelte Drehzahl eines die Eingangswelle (14) antreibenden Motors und eine mit einem Temperatur-sensor ermittelte Temperatur eines Kompres-sors (18) zu empfangen, wobei die empfangenen Werte Basis für verschiedene Schaltkriterien sind, die voneinander unabhängig ausgewertet werden, wobei immer die größte Übersetzung durch ein Betätigen der beiden schaltbaren Fixiervorrichtungen (26, 30) ausgewählt wird, die sich aus den einzelnen Schaltkriterien ableiten lässt, um eine unzulässig hohe Belastung des Kompressors (18) zu verhindern.

2. Kompressorsystem nach Anspruch 1, **dadurch gekennzeichnet, dass** das Hohlrad (20) gegenüber einem äußeren Widerlager (28) durch die zweite schaltbare Fixiervorrichtung (30) festlegbar ist, und dass das Hohlrad (20) gegenüber dem Planetenträger (22) durch die erste schaltbare Fixiervorrichtung (36) festlegbar ist.

3. Kompressorsystem (10) nach Anspruch 2, **dadurch gekennzeichnet, dass** die Eingangswelle (14) mit dem Planetenträger (22) verbunden ist, und dass die Ausgangswelle (16) mit einem Sonnenrad (32) verbunden ist.

4. Kompressorsystem (10) nach einem der vorhergehenden Ansprüche, **dadurch gekennzeichnet, dass** das Steuergerät (34) dazu ausgelegt ist, durch das Betätigen der zweiten schaltbaren Fixiervorrichtung (30) das Hohlrad (20) gegenüber dem äußeren Widerlager (28) festzulegen, wenn eine an der Eingangswelle (14) anliegende Drehzahl kleiner oder gleich einer festlegbaren Schwellendrehzahl ist.

5. Kompressorsystem (10) nach einem der vorhergehenden Ansprüche, **dadurch gekennzeichnet, dass** das Steuergerät (34) dazu ausgelegt ist, durch das Betätigen der ersten schaltbaren Fixiervorrichtung (26) das Hohlrad (20) gegenüber dem Planetenträger (22) festzulegen, wenn eine an der Eingangswelle (14) anliegende Drehzahl größer als eine festlegbare Schwellendrehzahl ist.

6. Kompressorsystem (10) nach einem der vorhergehenden Ansprüche, **dadurch gekennzeichnet,**

**dass** das Planetengetriebe (12) mehrstufig ausgeführt ist.

7. Verfahren zum Betreiben eines Kompressorsystems (10) umfassend ein Planetengetriebe (12) mit einer Eingangswelle (14) und einer Ausgangswelle (16) und einen an die Ausgangswelle (16) gekoppelten Kompressor (18) zur Erzeugung von Druckluft, wobei das Planetengetriebe (12) relativ zueinander bewegbare Komponenten in Form eines Hohlrades (20), eines Planetenträgers (22) und eines Sonnenrades (32) umfasst, und

- wobei zwei der relativ zueinander bewegbaren Komponenten durch eine erste schaltbare Fixiervorrichtung (26) gegeneinander festgelegt werden, wenn keine der relativ zueinander bewegbaren Komponenten gegenüber dem Widerlager (28) festgelegt ist, und
- wobei das Hohlrad (20), der Planetenträger (22) oder das Sonnenrad (32) durch eine zweite schaltbare Fixiervorrichtung (30) gegenüber einem äußeren Widerlager (28) festgelegt wird, wenn eine an der Eingangswelle (14) anliegende Drehzahl eine festlegbare Schwellendrehzahl über- oder unterschreitet,

**dadurch gekennzeichnet,**

- **dass** die erste schaltbare Fixiervorrichtung (26) und/oder die zweite schaltbare Fixiervorrichtung (30) pneumatisch angesteuert werden,
- **dass** ein Steuergerät (34) die beiden schaltbaren Fixiervorrichtungen (26, 30) ansteuert, und
- **dass** das Steuergerät (34), eine mit einem Drehzahlsensor ermittelte Drehzahl der Eingangswelle (14) und/oder eine mit einem weiteren Drehzahlsensor ermittelte Drehzahl eines die Eingangswelle (14) antreibenden Motors und eine mit einem Temperatursensor ermittelte Temperatur eines Kompressors (18) empfängt, wobei die empfangenen Werte Basis für verschiedene Schaltkriterien sind, die voneinander unabhängig ausgewertet werden, wobei immer die größte Übersetzung durch ein Betätigen der beiden schaltbaren Fixiervorrichtungen (26, 30) ausgewählt wird, die sich aus den einzelnen Schaltkriterien ableiten lässt, um eine unzulässig hohe Belastung des Kompressors (18) zu verhindern.

8. Verfahren nach Anspruch 7, **dadurch gekennzeichnet,**

- **dass** das Hohlrad (20) gegenüber einem äußeren Widerlager (28) festgelegt wird, wenn eine an der Eingangswelle (14) anliegende Drehzahl kleiner oder gleich der festlegbaren Schwellendrehzahl ist, und
- **dass** das Hohlrad (20) gegenüber dem Planetenträger (22) festgelegt wird, wenn die an der Eingangswelle (14) anliegende Drehzahl größer als die festlegbare Schwellendrehzahl ist.

**Claims**

1. Compressor system (10), comprising

- a planetary gear train (12) having an input, shaft (14) and an output shaft (16) and comprising a compressor (18) coupled to the output shaft (16) for producing compressed air,
- wherein the planetary gear train (12) comprises components that can be moved relative to one another in the form of a ring gear (20), a planet carrier (22), and a sun gear (32), and
- wherein a first switchable fixing device (26) is provided, by means of which two of the components of the planetary gear train (12) that can be moved relative to one another can be fixed with respect to one another, and
- wherein a second switchable fixing device (30) is provided, by means of which the ring gear (20), the planet carrier (22), or the sun gear (32) can be fixed with respect to an outer support (28),

**characterized**

- **in that** the first switchable fixing device (26) and/or the second switchable fixing device (30) are pneumatically controllable,
- **in that** the compressor system (10) comprises a control unit (34) which controls the first switchable fixing device (26) and the second switchable fixing device (30), and
- **in that** the control unit (34) is configured to receive a speed, determined by a speed sensor, of the input shaft (14), and/or a speed, determined by a further speed sensor, of a motor that drives the input shaft (14), and a temperature, determined by a temperature sensor, of a compressor (18), wherein the values received are the basis for various switching criteria, the latter being evaluated independently of one another, wherein the highest transmission ratio that can be derived from the individual switching criteria is always selected by actuating the two switchable fixing devices (26, 30), in order to prevent impermissibly high loading of the compressor (18).

2. Compressor system according to Claim 1, **characterized in that** the ring gear (20) can be fixed with respect to an outer support (28) by the second switchable fixing device (30), and **in that** the ring gear (20) can be fixed with respect to the planet carrier (22) by the first switchable fixing device (36) .

3. Compressor system (10) according to Claim 2, **characterized in that** the input shaft (14) is connected to the planet carrier (22), and **in that** the output shaft (16) is connected to a sun gear (32).

4. Compressor system (10) according to one of the preceding claims, **characterized in that** the control unit (34) is designed to fix the ring gear (20) with respect to the outer support (28) by actuating the second switchable fixing device (30) when a speed at the input shaft (14) is lower than or equal to a definable threshold speed.

5. Compressor system (10) according to one of the preceding claims, **characterized in that** the control unit (34) is designed to fix the ring gear (20) with respect to the planet carrier (22) by actuating the first switchable fixing device (26) when a speed at the input shaft (14) is higher than a definable threshold speed.

6. Compressor system (10) according ,to one of the preceding claims, **characterized in that** the planetary gear train (12) is of multistage design.

7. Method for operating a compressor system (10) comprising a planetary gear train (12) having an input shaft (14) and an output shaft (16) and comprising a compressor (18) coupled to the output shaft (16) for producing compressed air, wherein the planetary gear train (12) comprises components that can be moved relative to one another in the form of a ring gear (20), a planet carrier (22), and a sun gear (32), and

     - wherein two of the components that can be moved relative to one another are fixed with respect to one another by means of a first switchable fixing device (26) when none of the components that can be moved relative to one another is fixed with respect to the support (28), and
     - wherein the ring gear (20), the planet carrier (22), or the sun gear (32) is fixed with respect to an outer support (28) by means of a second switchable fixing device (30) when a speed at the input shaft (14) exceeds or falls below a definable threshold speed,

     **characterized**

     - **in that** the first switchable fixing device (26) and/or the second switchable fixing device (30) are pneumatically controlled;

     - **in that** a control unit (34) controls the two switchable fixing devices (26, 30); and
     - **in that** the control unit (34) receives a speed, determined by a speed sensor, of the input shaft (14), and/or a speed, determined by a further speed sensor, of a motor that drives the input shaft (14), and a temperature, determined by a temperature sensor, of a compressor (18), wherein the values received are the basis for various switching criteria, the latter being evaluated independently of one another, wherein the highest transmission ratio that can be derived from the individual switching criteria is always selected by actuating the two switchable fixing devices (26, 30), in order to prevent impermissibly high loading of the compressor (18).

8. Method according to Claim 7, **characterized**

     - **in that** the ring gear (20) is fixed with respect to an outer support (28) when a speed at the input shaft (14) is lower than or equal to the definable threshold speed, and
     - **in that** the ring gear (20) is fixed with respect to the planet carrier (22) when the speed at the input shaft (14) is higher than the definable threshold speed.

## Revendications

1. Système (10) de compresseur, comprenant

     - un engrenage (12) planétaire, ayant un arbre (14) menant et un arbre (16) mené et un compresseur (18) adjoint à l'arbre (16) mené, pour produire de l'air comprimé,
     - dans lequel l'engrenage (12) planétaire comprend des éléments mobiles les uns par rapport aux autres, sous la forme d'une roue (20) à denture intérieure, d'une cage (22) de transmission planétaire et d'une roue (32) solaire et
     - dans lequel il est prévu un premier dispositif (26) d'immobilisation commutable, par lequel deux des éléments mobiles relativement les uns aux autres de l'engrenage (12) planétaire peuvent être fixés l'un par rapport à l'autre et
     - dans lequel il est prévu un deuxième dispositif (30) de fixation commutable, par lequel la roue (20) à denture intérieure, la cage (22) de transmission planétaire ou la roue (32) solaire est fixée par rapport à une butée (28) extérieure,

     **caractérisé**

     - **en ce que** le premier dispositif (26) de fixation commutable et/ou le deuxième dispositif (30) de fixation commutable peuvent être commandés pneumatiquement,

- **en ce que** le système (10) de compresseur comprend un appareil (34) de commande commandant le premier dispositif (26) de fixation commutable et le deuxième dispositif (30) de fixation commutable et

- **en ce que** l'appareil (34) de commande est conçu pour recevoir une vitesse de rotation, déterminée par un capteur de vitesse de rotation, de l'arbre (14) menant et/ou une vitesse de rotation, déterminée par un autre capteur de vitesse de rotation, d'un moteur entraînant l'arbre (14) menant et une température, déterminée par une sonde de température, d'un compresseur (18), les valeurs reçues formant la base de divers critères de commutation, qui sont exploités indépendamment les uns des autres, dans lequel le rapport de transmission le plus grand étant toujours choisi par un actionnement des deux dispositifs (26, 30) de fixation commutables, lequel peut se déduire des divers critères de commutation, afin d'empêcher une charge grande de façon inadmissible du compresseur (18).

2. Système de compresseur suivant la revendication 1, **caractérisé en ce que** la roue (20) à denture intérieure peut être fixée par rapport à une butée (28) extérieure par le deuxième dispositif (30) de fixation commutable et **en ce que** la roue (20) à denture intérieure peut être fixée par rapport à la cage (22) de transmission planétaire par le premier dispositif (36) de fixation commutable.

3. Système (10) de compresseur suivant la revendication 2, **caractérisé en ce que** l'arbre (24) menant est relié à la cage (22) de transmission planétaire et **en ce que** l'arbre (16) mené est relié à une roue (32) solaire.

4. Système (10) de compresseur suivant l'une des revendications précédentes, **caractérisé en ce que** l'appareil (34) de commande est conçu pour, par l'actionnement du deuxième dispositif (30) de fixation commutable, fixer la roue (20) à denture intérieure par rapport à la butée (28) extérieure, si une vitesse de rotation s'appliquant à l'arbre (14) menant est inférieure ou égale à une vitesse de rotation de seuil pouvant être fixée.

5. Système (10) de compresseur suivant l'une des revendications précédentes, **caractérisé en ce que** l'appareil (34) de commande est conçu pour, par l'actionnement du premier dispositif (26) de fixation commutable, fixer la roue (20) à denture intérieure par rapport à la cage (22) de transmission planétaire, si une vitesse de rotation s'appliquant à l'arbre (14) menant est plus grande qu'une vitesse de rotation de seuil pouvant être fixée. 1

6. Système (10) de compresseur suivant l'une des revendications précédentes, **caractérisé en ce que** l'entraînement (12) planétaire est réalisé en plusieurs étages.

7. Procédé pour faire fonctionner un système (10) de compresseur, comprenant un engrenage (12) ayant un arbre (14) menant et un arbre (16) mené et un compresseur (18) adjoint à l'arbre (16) mené pour produire de l'air comprimé, l'engrenage (12) planétaire comprenant des éléments mobiles les uns par rapport aux autres, sous la forme d'une roue (20) à denture intérieure, d'une cage (22) de transmission planétaire et d'une roue (32) solaire et

- dans lequel on fixe, l'un par rapport à l'autre, par un premier dispositif (26) de fixation commutable, deux des éléments mobiles les uns par rapport aux autres, si aucun des éléments mobiles les uns par rapport aux autres n'est fixé par rapport à la butée (28) et

- dans lequel on fixe la roue (20) à denture intérieure, la cage (22) de transmission planétaire ou la roue (32) solaire par rapport à une butée (28) extérieure, si une vitesse de rotation s'appliquant à l'arbre (14) menant est supérieure ou est inférieure à une vitesse de rotation de seuil pouvant être fixée,

**caractérisé**

- **en ce que** l'on commande pneumatiquement le premier dispositif (26) de fixation commutable et/ou le deuxième dispositif (30) de fixation commutable,

- **en ce qu'**un appareil (34) de commande commande les deux dispositifs (26, 30) de fixation commutables et

- **en ce que** l'appareil (34) de commande reçoit une vitesse de rotation, pouvant être déterminée par un capteur de vitesse de rotation, de l'arbre (14) menant et/ou une vitesse de rotation, pouvant être déterminée par un autre capteur de vitesse de rotation, d'un moteur entraînant l'arbre (14) menant et une température, déterminée par une sonde de température, d'un compresseur (18), les valeurs reçues formant la base de divers critères de commutation, qui sont exploités indépendamment les uns des autres, dans lequel on choisit toujours le rapport de transmission le plus grand par un actionnement des deux dispositifs (26, 30) de fixation commutables, lequel peut se déduire des divers critères de commutation, afin d'empêcher une charge grande de façon inadmissible du compresseur (18).

**8.** Procédé suivant la revendication 7, **caractérisé**

- **en ce que** l'on fixe la roue (20) à denture intérieure par rapport à une butée (28) extérieure, si une vitesse de rotation s'appliquant à l'arbre (14) menant est inférieure ou égale à la vitesse de rotation de seuil pouvant être fixée et
- **en ce que** l'on fixe la roue (20) à denture intérieure par rapport à la cage (22) de transmission planétaire, si la vitesse de rotation s'appliquant à l'arbre (14) menant est plus grande que la vitesse de rotation de seuil pouvant être fixée.

Fig. 1

Fig. 2

Fig. 3

EP 2 758 665 B1

Fig. 4

Fig. 5

```
                            ┌─────────────────┐  ⌐100
                    ┌──────→│  Schaltkriterium │←──────┐
                    │       │    ermitteln     │       │
                    │       └─────────────────┘        │
                    │                │                 │
                    │                ↓                 │ Nein
                    │       ┌─────────────────┐        │
                    │       │                 │        │
                    │       │  Schaltvorgang  │────────┘
                    │       │   notwendig?    │
                    │       │                 │  ⌐102
                    │       └─────────────────┘
                    │                │
                    │                │ Ja
                    │                ↓
                    │       ┌─────────────────┐
                    └───────│   Übersetzung    │
                            │    anpassen      │
                            │                  │  ⌐104
                            └─────────────────┘
```

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3810911 A1
- DE 3740082 A1
- EP 0191150 A1
- US 200901278926 A1